**Europäisches Patentamt**

**European Patent Office**

**Office européen des brevets**

(19)

(11) Publication number: **0 202 513**
**B1**

# (12) EUROPEAN PATENT SPECIFICATION

(45) Date of publication of patent specification: **22.03.89**

(21) Application number: **86105884.0**

(22) Date of filing: **29.04.86**

(51) Int. Cl.⁴: **B 60 S 3/06, B 08 B 1/04**

(54) Brushing and washing machine.

(30) Priority: **29.04.85 AU 352/85**

(43) Date of publication of application:
**26.11.86 Bulletin 86/48**

(45) Publication of the grant of the patent:
**22.03.89 Bulletin 89/12**

(84) Designated Contracting States:
**DE FR GB IT SE**

(56) References cited:
**DE-A-2 902 027**
**DE-A-3 311 547**
**DE-A-3 403 415**
**US-A-2 636 198**
**US-A-2 876 472**

(73) Proprietor: **Crowhurst, Arthur George**
**Ramco Road**
**Waikerie, South Australia (AU)**

(72) Inventor: **Crowhurst, Arthur George**
**Ramco Road**
**Waikerie, South Australia (AU)**

(74) Representative: **Goddar, Heinz J., Dr. et al**
**FORRESTER & BOEHMERT Widenmayerstrasse**
**4/I**
**D-8000 München 22 (DE)**

EP 0 202 513 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a brushing and washing machine, more particularly to a machine for the cleaning of vertical surfaces such as the surfaces of shipping containers, transport vehicles, and buildings. Such a machine is already known from US—A—2,876,472.

Conventionally, vertical surfaces such as the side walls of shipping containers, transport vehicles such as furniture removal vans, refrigerated vans and the walls of buildings are cleaned manually by the use of a high pressure water jet and a broom or the like. High pressure water jets are suitable for removing a great deal of the loose grime which accumulates on such vehicles and containers and buildings, but a broom or some brushing means is required to remove the film of grime which adheres to the surface.

US—A—2 636 198 discloses a portable brushing machine for washing vehicles of the type for transport to and from a vehicle, the machine being carried on the forks of a fork-lift truck. The machine has a water storage tank, a pump and valve arrangement to deliver water spray to a brush rotatable on a vertical axis, the brush mounted on a horizontally reciprocal bar. A power unit is provided on the tank to drive the hydraulic pump to rotate the brush and horizontally reciprocate the bar, and lever control means to automatically control the operation.

US—A—2 950 492 discloses a portable vehicle washing machine mounted on a road transport vehicle, the machine having a cylindrical brush rotatable about a vertical axis.

It is an object of this invention to provide a portable brushing and washing machine of the type disclosed in US—A—2 876 472 which is suitable for the cleaning of vertical surfaces.

This object is defined by the features according to the second part of the only claim.

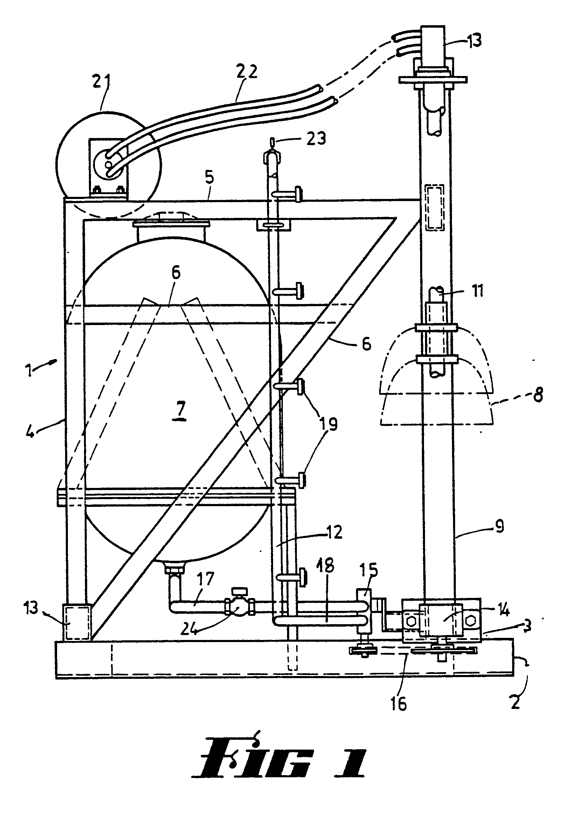

Fig. 1 a front elevation of the machine, and

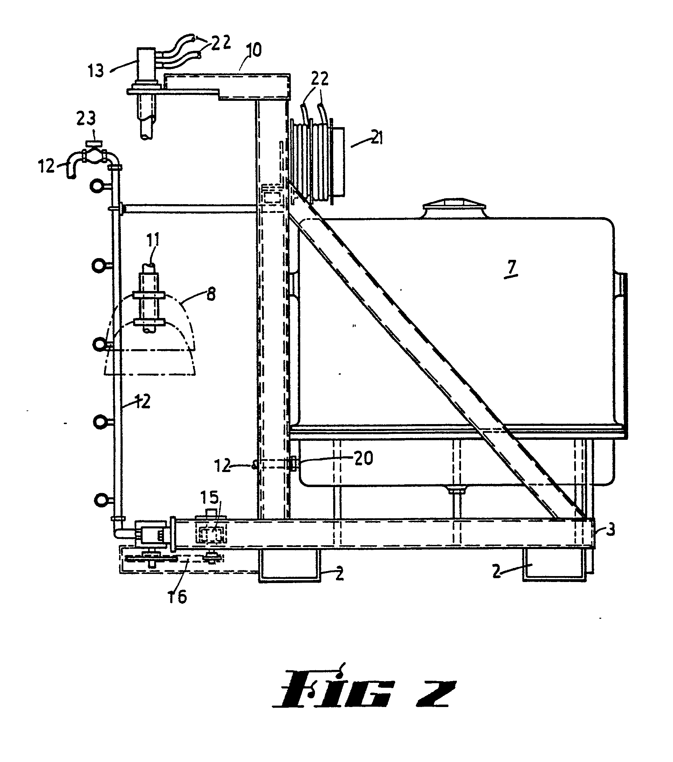

Fig. 2 is a side elevation thereof, parts in both drawings being omitted for the sake of clarity.

In a preferred form of the invention the machine is mounted in a framework 1 which is adapted to be lifted and carried by the forks of a forklift truck in channels 2. The framework 1 has lower horizontal members 3, upright 4, upper members 5 and bracing members 6.

On the framework 1 there is mounted a tank 7 to contain water with the addition of detergent if desired and also a brush 8 adapted to rotate about a vertical axis. The brush can be of a form which is conventionally used in equipment for the washing of motor vehicles, and is shown in broken lines for clarity and is only shown in part.

The brush is preferably mounted on one side of the framework 1 on vertical member 9 having an extension arm 10 carrying bearings and brush axle 11 to extend laterally therefrom, and also mounted on the framework 1 there is a vertical array of spray nozzles 19 to spray the water and detergent onto the surface being cleaned.

The brush 8 is driven by a hydraulic motor 13 which can be mounted on the upper end of the brush to be attached to the axle 11 of the brush, the lower end of the axle 11 of the brush mounted in bearings 14 and driving the pump 15 through step-up gearing 16 to pump the water from the tank 7 through lines 17, 18 to the bottom of the spray line 12 carrying the array of spray nozzles 19, line 17 having a control and stop valve 24 provided therein.

The upper end of the spray line 12 is connected back to the bottom of the tank, the fitting 20 at the bottom of the tank preferably including a venturi so that the water in the tank is continuously agitated with the detergent. The spray line at the top, that is at the opposite end to the inlet of the spray line is provided with an adjustable valve 23 so that the pressure in the spray line and spray nozzles can be suitably adjusted to achieve the desired spray pattern, the excess liquid being returned through the venturi fitting to the bottom of the tank.

The hydraulic motor 13 can be supplied with hydraulic fluid under pressure from the hydraulic system of the forklift truck and one convenient way of doing this is to disconnect one of the hydraulic controls from the hydraulic control valve and connect the hydraulic lines from the hydraulic motor to the control valve. The controls of a forklift truck include a movement for side shift, or a tilting or rotation movement, and one of these can be disconnected and have the hydraulic motor connected thereto while still allowing the raising and lowering of the forklift mechanism. Preferably a further control valve can be added to control the hydraulic motor, thus still allowing side shift and tilt or rotation for controlling the position of the brush.

A spray deflecting guard can be provided on the framework adjacent the brush to prevent the spray being carried back onto the forklift truck and operator, this deflector extending from the spray line back arund the brush.

In operation the brush can be rotated in either direction depending upon which direction is selected by the control valve.

A spring loaded reel 21 can be provided on the framework around which the hydraulic lines 22 can pass, thus allowing the forklift to be raised and lowered as desired, the spring loaded reel 21 taking up the slack in the hydraulic lines in the lower position and allowing the reel to unwind the hydraulic lines during the upward movement of the forklift.

Thus there is provided a versatile mobile unit for the cleaning of vertical surfaces, and where the surfaces are ribbed, the forklift can be tilted to a slight degree to allow the brush to more easily penetrate into the crevices adjacent the ribs, and by reversing rotation of the brush as desired, effective cleaning of irregular surfaces can thus be obtained.

Thus the unit can be taken to the vertical surfaces to be cleaned and with a shipping container, furniture removal van or the like the vertical surfaces can be easily cleaned by taking the unit to the container or vehicle. The container itself can also be cleaned on the vehicle and does not have to be removed therefrom.

## Claim

A mobile brushing and washing machine for brushing and washing vertical surfaces of the type comprising a framework (1), means on the framework for receiving the forks of a fork-lift truck, a vertically disposed cylindrical brush (8) rotatable about its axis for contacting a vertical surface to be brushed and washed, said brush having an axle means mounting the axle (11) of the brush to the framework (1) so that the brush (8) protrudes from the framework, a tank (7) mounted on the framework for containing wash liquid, a pump (15) having an inlet connected to said tank and an outlet line connected to a plurality of spray nozzles (19) disposed adjacent the brush for spraying wash liquid onto the brush, a hydraulic motor (13) for driving said brush and said pump, characterized in that said outlet line is also connected to the bottom of the tank through a fitting (20) which agitates the liquid in the tank as pumped liquid flows through the fitting and the spray nozzles and is provided with a means (23) for adjusting the pressure in the line and in the spray nozzles, said hydraulic motor (13) being mounted on the framework (1) axially above the axis of the brush (8) and directly connected to the upper end of the axle (11) of the brush for rotating the latter, the lower end of the brush axle being drivingly connected to the pump (15) through step-up gearing (16), hydraulic lines (22) connected at one end to the hydraulic motor and having opposite ends connectable to a hydraulic pump on a fork-lift truck, and a spring-loaded rotatable reel (21) mounted on the framework (1), the hydraulic lines (22) intermediate their ends being wrapped around the reel (21) so as to accommodate variations in the required length of the hydraulic lines between the hydraulic motor and the hydraulic pump on the fork-lift truck.

## Patentanspruch

Mobile Bürst- und Waschmaschine zum Bürsten und Waschen vertikaler Flächen von der Art mit einem Rahmen (1), Mitteln auf dem Rahmen zum Aufnehmen der Gabeln eines Gabelstaplers, einer vertikal angeordneten zylindrischen Bürste (8), die um ihre Achse zum Berühren einer zu bürstenden und zu waschenden Fläche drehbar ist, wobei die Bürste eine die Achse (11) der Bürste an dem Rahmen (1) lagerndes Achsmittel hat, so daß die Bürste (8) von dem Rahmen vorragt, einem an dem Rahmen montierten Tank zur Aufnahme einer Waschflüssigkeit, einer Pumpe (15) mit einem Einlaß, der mit dem Tank verbunden ist, und einer Auslaßleitung, die mit einer Mehrzahl von Sprühdüsen (19) verbunden ist, die benachbart der Bürste zum Aufsprühen einer Waschflüssigkeit auf die Bürste angeordnet sind, und einem hydraulischen Motor (13) zum Antreiben der Bürste und der Pumpe, dadurch gekennzeichnet, daß die Auslaßleitung weiter mit dem Boden des Tanks über ein Ansatzstück (20) verbunden ist, das die Flüssigkeit in dem Tank in Bewegung versetzt, wenn Flüssigkeit durch das Ansatzstück und die Sprühdüsen fließt und mit einem Mittel (23) versehen ist zum Einstellen des Drucks in der Leitung und in den Spraydüsen, wobei der hydraulische Motor (13) auf dem Rahmen (1) axial oberhalb der Achse der Bürsten (8) montiert und direkt mit dem oberen Ende der Achse (11) der Bürste verbunden ist, um diese zu drehen, wobei das untere Ende der Achse der Bürste antriebsmäßig mit der Pumpe (15) durch ein Übersetzungsgetriebe (16) verbunden ist, hydraulische Leitungen (22) an dem einen Ende mit dem hydraulischen Motor verbunden sind und an dem anderen Ende mit einer hydraulischen Pumpe des Gabelstaplers verbindbar sind, und eine federbelastete Scheibe (21), auf dem Rahmen (1) befestigt ist, wobei die hydraulischen Leitungen (22) zwischen ihren Enden um die Scheibe (21) gewickelt sind, um sich den Änderungen der erforderlichen Länge der hydraulischen Leitungen zwischen dem hydraulischen Motor und der hydraulischen Pumpe auf dem Gabelstapler anzupassen.

## Revendication

Machine mobile de brossage et lavage pour brosser et laver des surfaces verticales, du type comprenant un bâti (1), des moyens sur le bâti pour recevoir les fourches d'un chariot élévateur à fourches, une brosse (8) cylindrique, montée verticalement, rotative autour d'un axe pour contacter une surface verticale à brosser et laver, des moyens de montage de l'axe (11) de la brosse sur le bâti (1) de manière que la brosse (8) fasse saillie sur le bâti (1), un réservoir (7) monté sur le bâti pour contenir le liquide de lavage, une pompe (15) dont une entrée est reliée au dit réservoir et un conduit de sortie reliée à une pluralité d'adjutages d'arrosage (19) disposés adjacents à la brosse pour pulvériser du liquide de lavage sur la brosse, un moteur hydraulique (13) pour entraîner ladite brosse et ladite pompe, caractérisée par le fait que ledit conduit de sortie est relié aussi au fond du réservoir par un raccord (20) qui agite le liquide dans le réservoir alors que du liquide pompé circule dans le raccord et les ajutages d'arrosage et est muni d'un moyen (23) de réglage de la pression dans le conduit et dans les ajutages d'arrosage, ledit moteur hydraulique (13) étant monté sur le bâti (1) axialement au-dessus de l'axe de la brosse (8) et relié directement à l'extrémité supérieure de l'axe (11) de la brosse pour entraîner celle-ci en rotation, l'extrémité inférieure de l'axe de brosse étant reliée opérativement à la pompe (15) par un engrenage multiplicateur (16), des conduits hydrauliques (22) reliés par une extrémité au moteur hydraulique et dont les extrémités opposées sont reliables à une pompe hydraulique sur un chariot élévateur à fourche, et une bobine (21) montée rotative, rappeléc par ressort, sur le bâti (1), les conduits hydrauliques (22) entre leurs extrémités étant enroulés autour de la bobine (2) de façon à s'adapter aux variations de la longueur requise des conduits hydrauliques entre le moteur hydraulique et la pompe hydraulique sur le chariot élévateur à fourches.

FIG 1

**FIG 2**